# EUROPÄISCHE PATENTSCHRIFT

(11) **EP 3 574 204 B1**
(45) Veröffentlichungstag und Bekanntmachung des Hinweises auf die Patenterteilung: **12.08.2020**
(21) Anmeldenummer: 18701338.8
(22) Anmeldetag: 24.01.2018
(51) Int. Cl.: F02M 43/04, F02M 67/02, F02D 19/06, F02M 23/00

(54) **VERBRENNUNGSKRAFTMASCHINE MIT KRAFTSTOFF-EINSPRITZDÜSE MIT ZUSÄTZLICHER ZUFÜHRUNG EINES VERBRENNUNGSFÖRDERNDEN MEDIUMS IN DEN BRENNRAUM**
INTERNAL COMBUSTION ENGINE COMPRISING A FUEL INJECTION NOZZLE WITH AN ADDITIONAL SUPPLY OF A COMBUSTION-PROMOTING MEDIUM INTO THE COMBUSTION CHAMBER
MOTEUR À COMBUSTION INTERNE COMPRENANT UN INJECTEUR DE CARBURANT DOTÉ D'UNE ALIMENTATION SUPPLÉMENTAIRE DE LA CHAMBRE DE COMBUSTION EN FLUIDE FAVORISANT LA COMBUSTION

(30) Priorität: 26.01.2017 DE 102017201275
(43) Veröffentlichungstag der Anmeldung: 04.12.2019
(73) Patentinhaber: Erwin Junker Grinding Technology a.s., 27601 Mélník (CZ)
(72) Erfinder: JUNKER, Erwin, 77815 Bühl/Baden (DE)
(74) Vertreter: Leske, Thomas
(86) Internationale Anmeldenummer: PCT/EP2018/051683
(87) Internationale Veröffentlichungsnummer: WO 2018/138126

(56) Entgegenhaltungen:
- DE-A1- 3 936 986
- DE-A1-102005 014 644
- DE-A1-102013 014 329
- JP-A- 2008 138 609
- US-A1- 2014 083 397

## Beschreibung

Die Erfindung betrifft ein Verfahren zum Einbringen eines verbrennungsfördernden Mediums in den Zylinder einer Verbrennungsmaschine mit den Merkmalen gemäß Anspruch 1.

Es sind Hubkolben-Verbrennungskraftmaschinen bekannt, bei welchen die zur Verbrennung erforderliche Verbrennungsluft über ein Einlassventil im Zylinderkopf eines Zylinders dem Zylinder zugeführt wird, wobei das Einlassventil am Ende einer Einlassleitung angeordnet ist, über welche die gesamte Verbrennungsluft einschließlich der Spülluft dem Zylinder zuführbar ist. In herkömmlicher Bauart weisen die Verbrennungskraftmaschinen eine Einspritzdüse auf, welche eine Düsennadel in ihrem Innern aufweisen, über welche die Kraftstoffzufuhr in den Zylinder gesteuert wird. Es ist auch bekannt, zur Steuerung bzw. zum Steigern des Drehmoments der Verbrennungskraftmaschine wie auch zur Steuerung und Verbesserung des Kaltstartverhaltens von derartigen Verbrennungskraftmaschinen zusätzlich einen Druckluftspeicher vorzusehen, aus welchem zusätzliche Verbrennungsluft über das im Zylinderkopf angeordnete Einlassventil in den Zylinder eingeleitet wird. Diese zusätzliche Verbrennungsluft wird entweder direkt über das Lufteinlassventil im Zylinderkopf oder über ein zusätzliches Lufteinlassventil realisiert.

So ist aus DE 11 2007 000 944 T5 eine Verbrennungskraftmaschine beschrieben, bei welcher zusätzlich ein Druckluftbehälter unter einem recht hohen Druck von ca. 200 bar vorgesehen ist, aus welchem eine Einblasung von zusätzlicher Verbrennungsluft während des Verdichtungshubes, und zwar insbesondere während des Beginns des Kompressionshubes, realisiert wird. Zwar ist es damit möglich, einen positiven Einfluss auf die Emission und bei Mehrzylindermaschinen vor allem auch auf das gesamte Betriebsverhalten der Verbrennungskraftmaschine zu nehmen. Für derartig hohe Drücke im Druckbehälter ist allerdings ein erheblicher Anteil zusätzlicher Energie erforderlich, vor allem auch weil entsprechend große Luftmengen bei derartig hohen Drücken vorzuhalten und in die Zylinder in der Drehzahl der Verbrennungskraftmaschine entsprechend rascher Abfolge zu fördern sind.

In ähnlicher Art ist in JP 2008 138 609 A eine Einspritzdüse beschrieben, welche Ablagerungen an den Bohrungen in der Einspritzdüse verhindern soll. Diese bekannte Einspritzdüse realisiert das Einbringen von entweder Kraftstoff oder Luft in den Zylinder. Beides ist für die Verbrennung unerlässlich, wobei die für die Verbrennung erforderliche Kraftstoffmenge in herkömmlicher Weise über die Einspritzdüse eingebracht wird und über die zusätzliche Einbringung von Luft lediglich auf eine Beeinflussung des Verbrennungsluftverhältnisses λ Einfluss genommen wird. Es kann damit lediglich die Verbrennung dahingehend beeinflusst werden, mit wieviel Luftüberschuss diese im Zylinder stattfindet.

In DE 39 36 986 A1 ist ebenfalls ein Kraftstoffventil für eine luftverdichtende, direkteinspritzende Brennkraftmaschine beschrieben, bei welcher über das Sackloch in der Einspritzdüse eine daran angeschlossene luftführende Zuführleitung vorgesehen ist, mit welcher Luft zusätzlich in den Brennraum einbringbar ist. Auch damit wird lediglich bei in üblicher Weise eingespritzter Kraftstoffmenge das Verbrennungsluftverhältnis über die Zufuhr von zusätzlicher Verbrennungsluft realisiert, welche in üblicher Weise über die Einlassventile in den Zylinder eingebracht wird.

In DE 10 2013 014 329 A1 ist eine Dual-Fuel-Kraftstoffinjektoranordnung beschrieben, bei welcher zwei Kraftstoffe eingespritzt werden können, und zwar je nach Betriebsweise des Motors. Zum einen kann Dieselkraftstoff über eine erste Düsenanordnung in den Zylinder eingebracht werden. Zum anderen kann gasförmiger Kraftstoff über eine zweite Gasdüsenanordnung eingebracht werden. Zusätzlich kann korrespondierend mit dem Dieseleinspritzvorgang Luft in den Brennraum eingebracht werden. Auch darüber ist lediglich bei normal in den Zylinder eingebrachter Kraftstoffmenge der Verbrennungsluftüberschuss beeinflussbar.

Auch in DE 10 2005 014 644 A1 ist ein Brennstoffzuführsystem für eine Brennstoffkraftmaschine beschrieben, bei welcher Druckluft und Kraftstoff in den Zylinder eingebracht werden. Dabei wird ebenfalls das Verbrennungsluftverhältnis λ lediglich über den Luftüberschuss beeinflusst.

Dies ist auch in US 2014/008 3397 A1 in ähnlicher Weise beschrieben.

In DE 10 2010 033 591 A1 ist eine Verbrennungskraftmaschine mit verbessertem Kaltstartverhalten beschrieben. Zusätzlich komprimierte Druckluft aus einem Luftspeicher wird dem Zylinder unmittelbar vor dem eigentlichen Zündvorgang zugeführt, nachdem ein Brennstoff-Luft-Gemisch im Zylinder bereits komprimiert worden ist. Auch dafür sind relativ hohe Drücke im Druckluftbehälter vorzuhalten. Aus DE 10 2004 047 975 A1 ist bekannt, dass zusätzliche Verbrennungsluft in Form von Druckluft aus einem Druckspeicher getaktet während der Ansaugphase dem Zylinder zugeführt wird. Als Druckbehälter wird der bei einer Druckluftbremsanlage ohnehin vorgesehene Druckluftbehälter verwendet. Durch das getaktete Einblasen von Zusatzluft kann bei entsprechender Einstellung von Menge und Einblasdauer Einfluss auf die Betriebsparameter der Verbrennungskraftmaschine hinsichtlich des gesamten Leistungsverhaltens genommen werden. Auch bei diesem System wird die Zusatzluft der Ansaugleitung zugeführt, und zwar während der Ansaugphase. Dadurch ist auch eine relativ große Luftmenge aus dem Druckbehälter für jeden jeweiligen Einblastakt zur Verfügung zu stellen.

Weitere derartige Systeme mit zusätzlichem Druckluftbehälter sind aus DE 10 2012 014 204 B4 sowie aus DE 10 2012 014 205 B3, bei welcher Verbrennungskraftmaschine zusätzlich Verbrennungsluft aus einem Druckbehälter über in zwei Teilstränge aufgeteilte Ansaugkanäle mittels eines steuerbaren Sperrgliedes zugeführt werden kann, und aus DE 10 2008 00 326 A1 bekannt, bei welcher bekannten Verbrennungskraftmaschine eine zusätzliche Einrichtung zum Einblasen von zusätzlicher Druckluft zwischen einem vorgesehenen Turbolader und dem Einlassventil der Verbrennungskraftmaschine ebenfalls in den Luftansaugtrakt vorgesehen ist. Dabei wird die Druckluft nicht permanent in den Ansaugtrakt eingeführt, sondern nur, wenn dies in Abhängigkeit von der aktuellen Betriebssituation des Fahrzeuges hinsichtlich Sicherheit, Fahrkomfort sowie Verschleiß sinnvoll ist.

Den weiteren bekannten Systemen gemäß DE 102 247 19 B4, DE 39 063 12 C1 und
DE 2008 000 324 A1 ist gemein, dass ein zusätzlicher Druckbehälter an verschiedenen Stellen des Einlasssystems bei Motoren mit Turboaufladung wie auch bei Saugmotoren empfohlen wird.

Nachteilig für diese bekannten Verbrennungskraftmaschinen mit einem Druckspeicher, welcher zusätzlich in die Einlassleitung der Verbrennungskraftmaschine zusätzliche Verbrennungsluft speist, ist der relativ große apparative Aufwand und wegen der großen Querschnitte im Einlasssystem auch die relativ großen Luftmengen, die gefördert werden müssen, damit zumindest ein gewisser Teil an zusätzlicher Verbrennungsluft in den Zylinder gelangt.

Die Erfindung geht von einer in der DE 691 00 803 T2 beschriebenen Verbrennungskraftmaschine in Hubkolbenbauart aus. Diese weist ein in einem Zylinderkopf eines Zylinders angeordnetes Einlassventil, über welches Verbrennungsluft von einer an das Einlassventil angeschlossenen Einlassleitung dem Zylinder zuführbar ist, sowie einen Druckspeicher auf, aus welchem ein zusätzliches, die Verbrennung im Zylinder förderndes Medium dem Zylinder gesteuert zuführbar ist. Der Kraftstoff ist hierbei mittels einer Einspritzdüse gesteuert in den Zylinder einspritzbar, wobei der Druckspeicher an die eine Düsennadel aufweisende Einspritzdüse angeschlossen ist.

Verschiedene Bauformen für geeignete Einspritzdüsen sind beispielsweise in den Druckschriften DE 39 36 986 A1, DE 10 2013 014 329 A1 und DE 10 2014 002 905 A1 beschrieben. Demgegenüber besteht die Aufgabe der vorliegenden Erfindung darin, ein Verfahren zum Einbringen eines zusätzlich in den Zylinder einzubringenden, die Verbrennung fördernden gasförmigen oder flüssigen Mediums bereitzustellen, bei welchem eine zuverlässige Verbesserung des Betriebsverhaltens der Verbrennungskraftmaschine gewährleistet und zusätzlich der konstruktive und apparative Aufwand zur Steuerung der Zufuhr des Mediums in den Zylinder einer Verbrennungskraftmaschine so einfach wie möglich gehalten werden kann. Des Weiteren ist es die Aufgabe der Erfindung, bei verbesserten Abgaswerten die Motorleistung zu optimieren.

Diese Aufgabe wird mit einem Verfahren mit den Merkmalen gemäß Anspruch 1 gelöst. Zweckmäßige Weiterbildungen sind in den abhängigen Ansprüchen definiert.

Die das erfindungsgemäße Verfahren realisierende Verbrennungskraftmaschine in Hubkolbenbauart weist ein in einem Zylinderkopf eines Zylinders angeordnetes Einlassventil auf, welchem von einer Einlassleitung in den Zylinder einzuführende Verbrennungsluft oder zusätzlich ein Brenngas/Kraftstoff oder ein Verbrennungsluft-Brenngas/Kraftstoff-Gemisch zugeführt wird und welches durch entsprechende Ventilsteuerung die Verbrennungsluft, das Brenngas oder das Gemisch dem Zylinder getaktet zuführt. Des Weiteren weist die Verbrennungskraftmaschine einen Druckspeicher auf, aus welchem ein zusätzliches Medium zum Fördern der Verbrennung und gegebenenfalls der Gemischbildung im Zylinder dem Zylinder gesteuert zuführbar ist. Die Verbrennungskraftmaschine weist im Zylinderkopf des Weiteren eine Einspritzdüse auf, über welche Kraftstoff in den Zylinder einspritzbar ist, wobei der Kraftstoff mittels der Einspritzdüse entsprechend zerstäubt wird, um ein optimales Verbrennungsverhalten realisieren zu können. Erfindungsgemäß ist der Druckspeicher an die eine Düsennadel aufweisende Einspritzdüse angeschlossen, wobei das zusätzliche, in den Zylinder einzuleitende Medium aus dem Druckbehälter mittels der Düsennadel gesteuert in den Zylinder einleitbar ist. Für herkömmliche Verbrennungskraftmaschinen mit herkömmlichem Einspritzsystem werden Einspritzdüsen eingesetzt, welche in ihrem Innern eine Düsennadel aufweisen, welche durch entsprechenden Hub Querschnitte zum Einspritzen des unter Druck stehenden Kraftstoffes gewährleisten.

Erfindungsgemäß ist nun bei dem Verfahren vorgesehen, dass bei der Verbrennungskraftmaschine die herkömmliche Einspritzdüse zusätzlich so ausgebildet ist, dass das zusätzliche Medium über die Einspritzdüse ebenfalls in den Zylinder eingeleitet wird. Eine derartige Einspritzdüse hat eine Doppelfunktion, weil sie zum einen die an sich bekannte Einspritzung des Kraftstoffes und auch Zerstäubung des Kraftstoffes realisiert, aber zumindest teilweise gleichzeitig die Zufuhr von zusätzlichem Medium in Form des Verbrennungsluft-Brennstoff-Gemisches aus einem zusätzlichen Druckspeicher ermöglicht, so dass keine weiteren Organe zum Einleiten von diesem zusätzlichen Medium zur Verbesserung der Verbrennung im Zylinder erforderlich sind. Da in der Einspritzdüse eine relativ gute Steuerbarkeit gewährleistet ist, kann auch auf das Handhaben und Fördern großer Volumina, wie es erforderlich ist, wenn eine zusätzliche Zufuhr an Medium über die großvolumigen Einlasskanäle erreicht werden soll, bei der Verbrennungskraftmaschine weitestgehend verzichtet werden, ohne dass auf die gewollte Funktion, nämlich das Betriebsverhalten, das Drehmoment und das Kaltstartverhalten, bei dem erfindungsgemäßen Verfahren verzichtet werden muss. Dies kann bei der erfindungsgemäßen Lösung exakt gesteuert werden.

Vorzugsweise ist bei der Verbrennungskraftmaschine die Düsennadel derart hubgesteuert, vorzugsweise kraftstoffdruckgesteuert, dass bei Erreichen eines definierten Einspritzdruckes im Innern der Einspritzdüse durch die von einem Dichtsitz abhebende Düsennadel dieser Dichtsitz freigegeben wird, so dass an dem Dichtsitz vorbei Kraftstoff und/oder das Medium in den Zylinder einleitbar ist. Erfindungsgemäß wird nun das über die Einspritzdüse zugeführte Medium so eingeleitet, dass gleichzeitig oder zeitversetzt oder teilweise gleichzeitig bei entsprechender Beachtung der Druckverhältnisse in der Einspritzdüse und der auf die Düsennadel wirkenden Federkräfte das zusätzliche Medium über diesen Dichtsitz in den Zylinder eingeführt wird. Die Hubbewegung der Düsennadel kann aber auch mit Piezo-Elementen oder einem Spulenmagnet oder bei Großmotoren hydraulisch erfolgen.

Vorzugsweise weist die Düsennadel in ihrem Innern einen Mediumkanal auf, über welchen das zusätzliche Medium in den Zylinder einleitbar ist. Dieser Mediumkanal kann dabei an dem zuvor erwähnten Dichtsitz abgedichtet und geschlossen bzw. bei Anheben der Düsennadel geöffnet werden. Es ist aber auch möglich, dass weiter vorzugsweise am Druckspeicher oder am Einspritzventil oder zwischen dem Druckspeicher und dem Einspritzventil ein zusätzliches Ventil angeordnet ist, welches mittels einer Steuereinrichtung die Zufuhr des zusätzlichen Mediums zum Zylinder steuert. Dabei wird vorzugsweise die Menge an Medium wie auch dessen Volumenstrom zum Zylinder durch eine Steuerung dieses Ventils in Abhängigkeit vom Kraftstoffeinspritzvorgang vorgenommen, und zwar insbesondere in Abhängigkeit von der Kraftstoffeinspritzmenge. Indem die Zufuhr des zusätzlichen Mediums in Abhängigkeit von dem Kraftstoffeinspritzvorgang gesteuert wird, kann sichergestellt werden, dass das zusätzliche Medium beispielsweise erst gegen Ende des Einspritzvorganges des Kraftstoffes in den Zylinder eingelassen wird, so dass die Drücke in der Einspritzdüse bereits soweit reduziert sind, dass die Düsennadel zwar noch geöffnet ist, ein Rückströmen des unter Druck stehenden Kraftstoffes in den Mediumkanal jedoch unterbleibt. Dazu kann vorzugsweise zusätzlich vorgesehen sein, dass ein zusätzlicher Mechanismus die Düsennadel am Dichtsitz noch offen hält, obwohl der Kraftstoffdruck, welcher gewöhnlich das Anheben der Düsennadel im Einspritzdüsengehäuse gewährleistet, bereits soweit abgebaut ist, dass unter normalen Umständen der auf der Düsennadel lastende Federdruck deren Schließen realisieren würde.

Das zu der Förderung der Verbrennung in den Zylinder zusätzlich eingeführte Medium ist vorzugsweise gasförmig, und weiter vorzugsweise handelt es sich um ein Verbrennungsluft-Brenngas-Gemisch, so dass über die Anteile beider Bestandteile des Gemisches direkt Einfluss auf das Betriebsverhalten des Motors genommen werden kann. Gemäß einem weiteren Ausführungsbeispiel ist es auch möglich, dass das zusätzliche Medium flüssig ist, wobei das Medium vorzugsweise flüssig ist im Druckspeicher und dem Mediumkanal bis hin zur Einspritzung oder Einbringung in den Zylinder des Motors, wo aufgrund der Druck- und Temperaturverhältnisse ein gegebenenfalls auch sofortiger Übergang in eine gasförmige Phase erfolgen kann, in flüssiger Phase zugeführt wird. Vorzugsweise ist das flüssige Medium Wasser, dessen atomisierende Wirkung im Zylinder bei separater Einspritzung oder bei Einspritzung als Wasser-Kraftstoff-Emulsion gemeinhin bekannt ist. Eine Zuführung von Wasserdampf ist ebenfalls möglich.

Vorzugsweise ist die Mediumzuführung durch das Gehäuse der Einspritzdüse zur im Innern der Einspritzdüse angeordneten Düsennadel durch eine Querbohrung realisiert, welche über den Hub der Düsennadel geöffnet bzw. geschlossen werden kann. Es ist zudem auch möglich, dass an der Düsennadel und/oder am Gehäuse der Einspritzdüse eine radial umlaufende Nut jeweils mit der gleichen Breitenabmessung wie die zugehörige Bohrung vorgesehen ist, damit selbst bei Verdrehung der Düsennadel im Betrieb eine Zufuhr von Medium über die radialen Mediumkanäle zum zentralen Mediumkanal stets gewährleistet ist.

Vorzugsweise ist die Einspritzdüse eine Mehrlochdüse mit einem Sackloch. Sie kann jedoch weiter vorzugsweise auch eine Einspritzdüse in Form einer Drosselzapfendüse sein. Die Ausbildung einer Einspritzdüse als Mehrlochdüse mit einem Sackloch kann dabei mit normaler Größe oder mit verminderter Sacklochgröße realisiert werden. Der grundsätzliche Aufbau derartiger Sacklochdüsen ist an sich bekannt und ist dadurch gekennzeichnet, dass die Düsennadel an ihrem vorderen Bereich eine kegelige Ausbildung aufweist, welche im Innern des Einspritzdüsengehäuses eine Dichtwirkung oberhalb des Sackloches realisiert, wenn kein Kraftstoffdruck an einer darüber liegenden Schulter der Düsennadel diese vom Dichtsitz abhebt. Die kegelige Spitze der Düsennadel dichtet daher den Druckraum des Kraftstoffes vom Sackloch ab, von welchem aus in radialer Ausrichtung mehrere Einspritzbohrungen zum Innern des Zylinders führen. Bei einer Drosselzapfendüse handelt es sich dagegen um sogenannte Einlochdüsen mit einem in das Spritzloch des Düsenkörpers eintauchenden Zapfen an der Düsennadel. Der Vorteil derartiger Drosselzapfendüsen besteht darin, dass eine gewisse Selbstreinigung der Düsenöffnung bewirkt wird.

Weiter vorzugsweise ist zwischen dem Druckspeicher und unmittelbar am Anschluss an das Einspritzdüsengehäuse eine Mediumleitung vorgesehen, über welche das zusätzliche Medium zur Einspritzdüse und damit über die Einspritzdüse in den Zylinder geführt wird. Der Durchmesser der Mediumleitung ist dabei so ausgebildet, dass er zumindest dem maximalen Hub der Düsennadel entspricht. Damit ist sichergestellt, dass bei jedem Hub der Düsennadel eine Beaufschlagung des im Innern der Düsennadel angeordneten Mediumkanals mit zusätzlichem Medium gewährleistet ist.

Die wesentlichen Vorteile des erfindungsgemäßen Verfahrens bestehen darin, dass bei der Verbrennungskraftmaschine mit einer Einspritzdüse, über welche zusätzliches Medium neben dem in herkömmlicher Weise erfolgenden Einspritzen von Kraftstoff vorgenommen wird, ein verbessertes Steuerverhalten der Verbrennungskraftmaschine bei unterschiedlichen Betriebsverhältnissen möglich ist, ohne dass ein großer konstruktiver und apparativer zusätzlicher Aufwand erforderlich ist. Des Weiteren ist eine erhebliche Leistungssteigerung bei gleichem Hubraum möglich.

Durch die Einflussnahme ist es aber nicht nur möglich, eine Leistungssteigerung des Motors zu erreichen. Durch die gezielte Beeinflussung des Betriebsverhaltens des Motors ist auch eine Abgasoptimierung in hohem Maße erreichbar.

Gemäß der Erfindung weist das Verfahren ein Einbringen eines zusätzlichen, die Verbrennung und gegebenenfalls auch die Gemischbildung in einem Zylinder einer Verbrennungskraftmaschine in den Zylinder dieser Verbrennungskraftmaschine fördernden Mediums auf. Gemäß dem erfindungsgemäßen Verfahren wird das Medium in Form von Verbrennungsluft-Brennstoff-Gemisch über eine im Zylinderkopf eines Hubkolbenmotors ohnehin vorhandene Einspritzdüse zugeführt, welche speziell für dieses erfindungsgemäße Verfahren angepasst ist.

Vorzugsweise erfolgt die Zuführung des Mediums zumindest teilweise zeitgleich mit dem Kraftstoff. Es ist aber auch möglich, dass die Zuführung des Mediums abgekoppelt vom Kraftstoff erfolgt, damit nicht auch die hohen Drücke wie bei der Kraftstoffzufuhr für das in den Zylinder einzubringende Medium erforderlich sind.

Gemäß einer bevorzugten Ausbildung erfolgt die Zuführung des Mediums ventilgesteuert unabhängig von der Hubbewegung der Düsennadel. Das bedeutet, dass in einem Mediumkanal vom Druckspeicher zur Einspritzdüse ein Ventil angeordnet ist, welches mittels einer Steuereinrichtung gesteuert wird, so dass die Menge an zusätzlichem Medium in den Zylinder gesteuert wird. Gemäß einer alternativen Variante erfolgt das Einführen des zusätzlichen Mediums während der Kraftstoffeinspritzung hubgesteuert. Und weiter vorzugsweise ist das zusätzliche Medium ein gasförmiger Brennstoff, welcher entweder allein oder in Form eines Verbrennungsluft-Brennstoff-Gemisches in den Zylinder als zusätzliches Medium eingebracht wird. Es ist aber auch möglich, dass als Gemisch gasförmiger Brennstoff und Gase aus der Abgasrückführung verwendet werden.. Die zusätzlich über die Einspritzdüse in den Zylinder eingebrachte Druckluft sorgt dafür, dass ein zusätzliches Angebot von Sauerstoff für die im Zylinder stattfindende Verbrennung bereitgestellt wird.

Weitere Vorteile, Details und Ausgestaltungen der Erfindung werden nun anhand des nachfolgend erläuterten Ausführungsbeispiels in den Zeichnungen detailliert beschrieben. In der Zeichnung zeigen:
- Figur 1: eine prinzipielle Ansicht eines Zylinders einer Hubkolbenmaschine mit Einlassleitung, Abgasleitung und an die Einspritzdüse angeschlossenem Druckbehälter für ein Medium zur Förderung der Verbrennung im Zylinder;
- Figur 2: eine Schnittansicht durch den Zylinder einer Hubkolbenmaschine mit Einlassventil, Auslassventil und Einspritzdüse;
- Figur 3: eine Schnittansicht durch eine Einspritzdüse in Drosselzapfenbauart am Zylinderkopf mit Zuleitung für ein die Verbrennung im Zylinder förderndes Medium;
- Figur 4: eine Ansicht gemäß Figur 3, jedoch mit freigegebenen Dichtsitz der Düsennadel bei angehobener Position derselben;
- Figur 5: eine vergrößerte Detailansicht einer Drosselzapfendüse als Einspritzdüse; und
- Figur 6: eine Sacklochdüse als Einspritzdüse mit größerem (links) und kleinerem Sackloch (rechts).

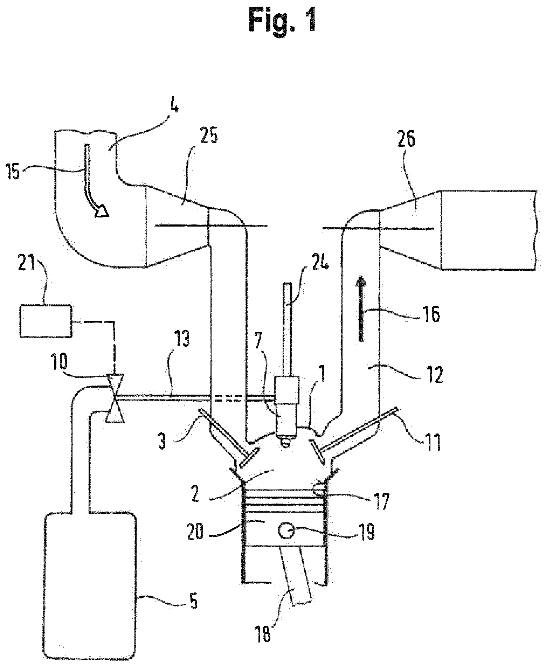

Figur 1 ist eine prinzipielle Ansicht eines Zylinders 2 einer Hubkolbenmaschine mit im Zylinderkopf 1 angebrachtem Einlassventil 3 und Auslassventil 11. Über eine Ladeluftleitung 4 bzw. Einlassleitung wird Einlassluft 15 durch einen Verdichter 25 zur Erhöhung des Ladedruckes geleitet und von dort zum Einlassventil 3 und bei geöffnetem Einlassventil 3 in den Zylinder 2 geführt. Bei geöffnetem Auslassventil 11 strömt nach der Verbrennung verbranntes Gas 16 durch das Auslassventil 11 in die Abgasleitung 12 und von dort durch die Abgasturbine 26, in welcher Energie aus dem Abgas 16 zum Antrieb des in der Einlassleitung 4 angeordneten Verdichters 25 extrahiert wird.

Im Zylinderkopf 1 ist des Weiteren eine Einspritzdüse 7 angeordnet, über welche über eine Kraftstoffleitung 24 Kraftstoff in den Zylinder zu dessen Verbrennung eingespritzt wird. An die Einspritzdüse 7 ist eine Mediumleitung 13 für ein gasförmiges oder flüssiges Medium angeschlossen, welches über die Einspritzdüse 7, und zwar über das Innere der Einspritzdüse 7 durch deren Düsennadel 6 in den Zylinder 2 eingebracht wird, um die Verbrennung zu fördern. Das gasförmige oder flüssige Medium kann dabei ein Verbrennungsluft-Brennstoff-Gemisch, deren Sauerstoffanteil zur verbesserten Verbrennung beiträgt, oder ein Gemisch aus Brenngas und Luft sein, das selbst bei den durch die Kompression im Zylinder 2 bei der Bewegung des Kolbens 20 in Richtung auf den oberen Totpunkt geschaffenen Temperaturen entzündet und verbrennt, so dass zusätzliche Energie für den Arbeitstakt des Kolbens 20 der Verbrennungskraftmaschine bereitgestellt wird. Die von der Verbrennung resultierende Arbeit wird über den Kolben 20, den Pleuelzapfen 19 und das Pleuel 18 an die in Figur 1 nicht dargestellte Kurbelwelle zu deren Antrieb weitergeleitet.

Ein Druckspeicher 5 für das Medium ist an die Mediumleitung 13 und damit an die Einspritzdüse 7 angeschlossen. Zwischen dem Druckspeicher 5 und der Einspritzdüse 7 ist ein Ventil 10 angeordnet, über welches die Menge an unter Druck gesetztem Medium über die Einspritzdüse 7 dem Zylinder 2 zur verbesserten Verbrennung zugeführt wird. Dieses Ventil 10 wird über eine Steuereinrichtung 21 hinsichtlich der durchgelassenen Menge an Medium gesteuert. Die Steuerung erfolgt dabei in Abhängigkeit von gewünschten bzw. überwachten Motorparametern wie beispielsweise Kaltstartverhalten, Leistung, Abgasverhalten etc.

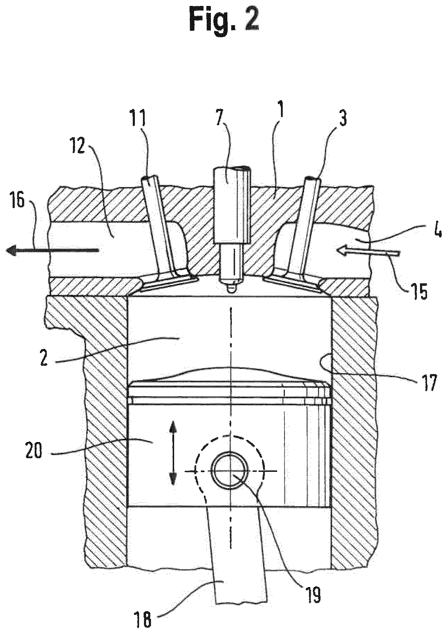

In Figur 2 ist ein Querschnitt durch einen Hubkolbenzylinder gezeigt. Der Zylinder 2 weist einen Zylinderkopf 1 auf, in welchem ein Einlassventil 3 und ein Auslassventil 11 sowie eine Einspritzdüse 7 angeordnet sind. Über eine Einlassleitung 4 strömt Einlassluft 15 zum Einlassventil 3 und bei dessen Öffnung während des Spül- bzw. Ansaugtaktes in den Zylinder 2. Im Zylinder 2 ist in der Zylinderbuchse 17 ein Kolben 20 geführt, welcher über einen Pleuelzapfen 19 und das Pleuel 18 mit einer nicht dargestellten Kurbelwelle verbunden ist. Ebenfalls im Zylinderkopf 1 angeordnet ist ein Auslassventil 11, welches im geöffneten Zustand verbranntes Gas, welches vom Verbrennungsprozess im Zylinder 2 resultiert, in die Abgasleitung 12 als Abgas 16 in deren weiteren Strang wie z. B. auch zu einer gegebenenfalls vorhandenen Abgasturbine 26 (siehe Figur 1) geleitet wird. Figur 2 zeigt den prinzipiellen Aufbau eines derartigen Zylinders 2, ohne dass die Anschlussleitung für das unter Druck stehende Medium an die Einspritzdüse 7 dargestellt ist.

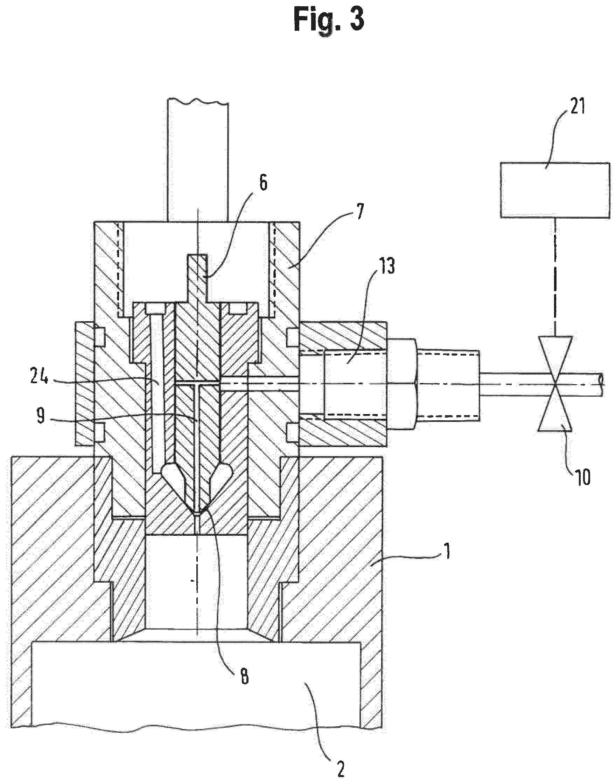

Dies ist aus der Detailzeichnung gemäß Figur 3 ersichtlich. Dort ist in einem Zylinderkopf 1 eines Zylinders 2 in prinzipieller Darstellung als Schnittansicht eine Einspritzdüse 7 dargestellt, welche in ihrem Innern in üblicher bekannter Bauweise eine Düsennadel 6 besitzt. Die Einspritzdüse 7 ist als Drosselzapfendüse ausgebildet und weist daher nur einen einzigen Dichtsitz 8 und ein einziges Einspritzloch auf. Der Vorteil derartiger Drosselzapfendüsen besteht darin, dass wegen des nur einzigen Einspritzloches eine gewisse Selbstreinigung während des Verbrennungsprozesses im Zylinder 2 möglich ist. Dieser Dichtsitz 8 ist am unteren Spitzenbereich der Düsennadel 6 angeordnet. Im Innern der Düsennadel 6 ist ein Mediumkanal 9 vorgesehen, über welchen das die Verbrennung fördernde Medium in den Zylinder 2 eingebracht wird. Diese Bohrung ist in Längsrichtung angeordnet, und zwar zweckmäßigerweise mit der Längsachse der Düsennadel 6 zusammenfallend. Darüber hinaus besitzt diese Düsennadel 6 radial verlaufende Bohrungen, welche positionsgemäß mit einer Zuleitung verbunden sind, deren in Längsrichtung der Düsennadel 6 vorhandene Querschnittsabmessung der Zuleitung für das Medium eine solche Größe aufweist, dass die Radialbohrungen der Düsennadel 6 in deren Hubbereich mit dem Medium beaufschlagt werden kann. Um eine verbesserte Zuführung des Mediums zu gewährleisten, ist an der Düsennadel 6 und/oder an der Einspritzdüse 7 eine in der Figur nicht gesondert dargestellte radial umlaufende Verteilernut vorgesehen. Diese entspricht in der Breite dem Durchmesser der jeweiligen zugeordneten Zuführbohrung. Diese Nut ist am Außendurchmesser der Düsennadel 6 und/oder am Innendurchmesser der Einspritzdüse 7, der zur Aufnahme der Düsennadel 6 dient, angebracht. Das Medium wird über eine Mediumleitung 13 über einen Anschlussstopfen zur Düsennadel 6 im Innern der Einspritzdüse 7 zugeführt. In der Mediumleitung 13 befindet sich zwischen dem in Figur 3 nicht dargestelltem Druckbehälter für das Medium ein Ventil 10, dessen Schließ- und Öffnungsvorgang über eine Steuereinrichtung 21 in Abhängigkeit von Motorparametern wie Betriebsverhalten, Leistung, Kaltstartverhalten, Abgasverhalten gesteuert wird. Im Innern der Einspritzdüse 7 befindet sich eine Kraftstoffleitung 24, mittels welcher der Kraftstoff in die Einspritzdüse 7 und damit in den unteren Bereich der Düsennadel 6 geführt wird. Bei entsprechender Beaufschlagung wird dieser Kraftstoff in den Bereich der Düse geführt, welcher einen kegelstumpfförmigen Sitz 8 aufweist und mittels welchem durch den Kraftstoffdruck durch die Wirkung von dessen resultierenden Druckkräften in Richtung der Längsachse der Düsennadel 6 diese angehoben wird.

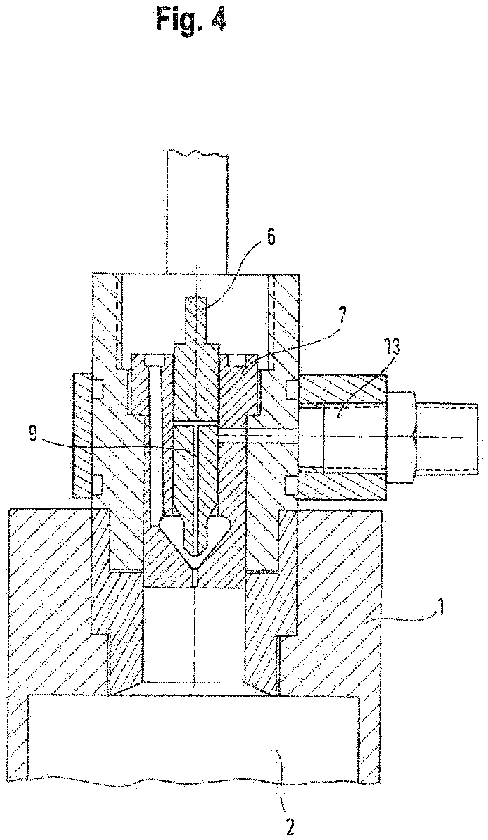

Der angehobene Zustand der Düsennadel 6, in welchem der Dichtsitz 8 an der Spitze der Düsennadel 6 freigegeben ist, ist in Figur 4 dargestellt. Die übrigen Bauteile entsprechen denen in Figur 3, so dass sie nicht nochmals näher erläutert werden.

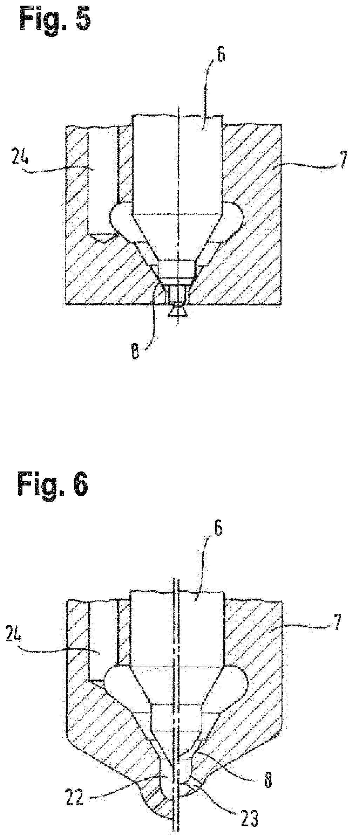

Zum besseren Verständnis sind in Figur 5 und Figur 6 zwei Grundtypen von Einspritzdüsen in vergrößerter Ansicht dargestellt, nämlich eine Drosselzapfendüse gemäß Figur 5, wie sie schon in Verbindung mit den Figuren 3 und 4 beschrieben worden ist, sowie eine Sacklochdüse gemäß Figur 6, welche ebenfalls in einer Anordnung gemäß Figur 3 oder Figur 4 in der Einspritzdüse 7 Verwendung findet.

Gemäß Figur 5 ist die Düsennadel 6 mit einer Zapfenspitze mit ihrem Dichtbereich an den Dichtsitz 8 geführt, so dass auf Grund der auf die Düsennadel 6 wirkenden Druckkraft des Kraftstoffes die Düsennadel vom Dichtsitz 8 abhebt und eine Zufuhr von Kraftstoff durch die Kraftstoffleitung 24 in den unteren Bereich der Düsennadel 6 erfolgt. Der untere Bereich ist kegelstumpfförmig ausgebildet und steht bei vorhandenem bzw. anliegendem Kraftstoffdruck unter einer in Richtung der Längsachse der Düsennadel 6 wirkenden Kraft. Der Kraftstoffdruck muss nun eine solche Größe aufweisen, dass die resultierende Kraft, welche auf die Düsennadel 6 wirkt, ausreichend groß ist, dass diese von ihrem Sitz in der Einspritzdüse 7 abhebt.

In ihrer prinzipiellen Funktion unterscheidet sich die Sacklochdüse von der Drosselzapfendüse nicht, außer dass unterhalb des Dichtsitzes 8 der Düsennadel 6 in der Einspritzdüsen 7 ein Sackloch 22 ausgebildet ist, was nach kraftstoffbedingtem Anheben der Düsennadel 6 eine Freigabe des Dichtsitzes 8 realisiert, so dass das unter diesen Umständen dann mit unter Druck stehendem, von der Kraftstoffleitung 24 in das Sackloch 22 geführtem Kraftstoff dazu führt, dass dieser in den radial ausgebildeten Einspritzbohrungen 23 zum Zylinder 2 geführt und dort in diesen in zerstäubter Form eingebracht wird. Die Zufuhr von die Verbrennung förderndem Medium in Form eines Verbrennungsluft-Brennstoff-Gemisches durch die in den Figuren 5 und 6 nicht gezeigte innere Bohrung 9 kann nun über das steuerbare Ventil 10 erfolgen.

In Abhängigkeit von diversen Motorparametern kann die Steuerung der Freigabe des Dichtsitzes 8 derartig erfolgen, dass zu definierten Zeiten der Kraftstoff und das Medium in den Zylinder 2 eingespritzt bzw. eingebracht werden können.

### Bezuqszeichenliste

- 1: Zylinderkopf
- 2: Zylinder
- 3: Einlassventil
- 4: Einlassleitung
- 5: Druckspeicher für ein die Verbrennung förderndes Medium
- 6: Düsennadel
- 7: Einspritzdüse
- 8: Dichtsitz
- 9: Mediumkanal
- 10: Ventil
- 11: Auslassventil
- 12: Abgasleitung
- 13: Mediumleitung
- 14: Einspritzdüsengehäuse
- 15: Einlassluft
- 16: Abgas
- 17: Zylinderbuchse
- 18: Pleuel
- 19: Pleuelzapfen
- 20: Kolben
- 21: Steuereinrichtung
- 22: Sackloch
- 23: Einspritzbohrung
- 24: Kraftstoffleitung
- 25: Verdichter
- 26: Abgasturbine

## Patentansprüche

1. Verfahren zum Einbringen von Kraftstoff und eines zusätzlichen, die Verbrennung im Zylinder (2) einer Verbrennungskraftmaschine in Hubkolbenbauart fördernden Mediums in den Zylinder (2) eines Hubkolbenmotors, wobei der Zylinderkopf (1) eine Einspritzdüse (7) mit einer Düsennadel (6) aufweist und wobei das Medium über die Einspritzdüse (7) des Hubkolbenmotors zugeführt wird
**dadurch gekennzeichnet,**
**dass** das zusätzliche Medium ein Verbrennungsluft-Brennstoff-Gemisch ist, welches einem Druckspeicher (5) entnommen und über die den Kraftstoff zuführende Einspritzdüse (7) in den Zylinder (2) eingebracht wird.

2. Verfahren nach Anspruch 1, **dadurch gekennzeichnet, dass** die Zuführung des Mediums zumindest teilweise zeitgleich mit der Zuführung des Kraftstoffes in den Zylinder (2) erfolgt.

3. Verfahren nach Anspruch 1 oder 2, **dadurch gekennzeichnet, dass** die Zuführung des Mediums ventilgesteuert unabhängig von der Hubbewegung der Düsennadel (6) der Einspritzdüse (7) erfolgt.

4. Verfahren nach einem der Ansprüche 1 bis 3, **dadurch gekennzeichnet, dass** das Einbringen des zusätzlichen Mediums während der Kraftstoffeinspritzung hubgesteuert erfolgt.

## Claims

1. Method for the introduction into the cylinder (2) of a reciprocating piston engine of fuel and an additional medium which promotes the combustion in the cylinder (2) of an internal combustion engine of a reciprocating piston design, the cylinder head (1) having an injection nozzle (7) with a nozzle needle (6), and the medium being fed via the injection nozzle (7) of the reciprocating piston engine, **characterized in that** the additional medium is a combustion air/fuel mixture which is removed from a pressure store (5) and is introduced into the cylinder (2) via the injection nozzle (7) which feeds in the fuel.

2. Method according to Claim 1, **characterized in that** the feed of the medium takes place at least in part at the same time as the feed of the fuel into the cylinder (2).

3. Method according to Claim 1 or 2, **characterized in that** the feed of the medium takes place in a valve-controlled manner independently of the stroke movement of the nozzle needle (6) of the injection nozzle (7).

4. Method according to one of Claims 1 to 3, **characterized in that** the introduction of the additional medium takes place in a stroke-controlled manner during the fuel injection.

## Revendications

1. Procédé pour introduire, dans le cylindre (2) d'un moteur de type à piston alternatif, du carburant et un milieu supplémentaire favorisant la combustion dans le cylindre (2) d'un moteur à combustion interne à piston alternatif, la culasse (1) présentant une buse d'injection (7) avec un pointeau de buse (6) et le milieu étant acheminé par le biais de la buse d'injection (7) du moteur à piston alternatif,
**caractérisé en ce que**
le milieu supplémentaire est un mélange d'air comburant et de carburant qui est prélevé d'un réservoir sous pression (5) et qui est introduit dans le cylindre (2) par le biais de la buse d'injection (7) acheminant le carburant.

2. Procédé selon la revendication 1, **caractérisé en ce que** l'apport du milieu s'effectue au moins en partie simultanément avec l'apport du carburant dans le cylindre (2).

3. Procédé selon la revendication 1 ou 2, **caractérisé en ce que** l'apport du milieu s'effectue de manière commandée par soupape indépendamment du mouvement de course du pointeau de buse (6) de la buse d'injection (7).

4. Procédé selon l'une quelconque des revendications 1 à 3, **caractérisé en ce que** l'introduction du milieu supplémentaire s'effectue pendant l'injection de carburant de manière commandée par la course.
